# EUROPEAN PATENT APPLICATION

(11) **EP 4 611 469 A1**
(43) Date of publication of application: **03.09.2025**
(21) Application number: 23884615.8
(22) Date of filing: 19.10.2023
(51) Int. Cl.: H04W 74/08

(54) **CHANNEL ACCESS METHOD AND RELATED APPARATUS**

(30) Priority: 04.11.2022 CN 202211378676
(71) Applicant: Huawei Technologies Co., Ltd., Shenzhen, Guangdong 518129 (CN)
(72) Inventor: LIU, Peng, Shenzhen, Guangdong 518129 (CN); GUO, Ziyang, Shenzhen, Guangdong 518129 (CN); LI, Yunbo, Shenzhen, Guangdong 518129 (CN)
(74) Representative: Isarpatent
(86) International application number: PCT/CN2023/125400
(87) International publication number: WO 2024/093683

(57) **Abstract**

Embodiments of this application disclose a channel access method and a related apparatus. The method includes: when a communication apparatus does not receive a corresponding response frame after sending a frame, increasing a value of a backoff exponent and performing backoff; performing CCA after the backoff is completed; and if a result of the CCA is idle, performing sending, or if a result of the CCA is busy, reperforming backoff. According to the embodiments of this application, collisions or conflicts can be reduced in a scenario in which a hidden terminal exists, and channel access performance can be improved. This application is applied to a UWB-based WAPN system, a sensing system, or the like, including 802.15 series protocols, such as an 802.15.4ab protocol or a next-generation UWB protocol of the 802.15.4ab protocol; and may be further applied to a wireless local area network system based on 802.11 series protocols, such as 802.11be, or a next-generation protocol of 802.11be like Wi-Fi 8.

## Description

This application claims priority to Chinese Patent Application No. 202211378676.5, filed with the China National Intellectual Property Administration on November 4, 2022, and entitled "CHANNEL ACCESS METHOD AND RELATED APPARATUS", which is incorporated herein by reference in its entirety.

### TECHNICAL FIELD

This application relates to the field of wireless communication technologies, and in particular, to a channel access method and a related apparatus.

### BACKGROUND

A key technology in an unlicensed spectrum is channel access. The purpose of channel access is to efficiently use a spectrum while ensuring user fairness, in other words, to improve spectrum efficiency as much as possible. Carrier sense multiple access (carrier sense multiple access, CSMA) is a common channel access manner. Before channel access is performed, energy detection (or carrier sense) is performed to determine whether a channel is busy or idle, and sending is allowed only when the channel is idle. To further reduce collisions, a random backoff mechanism is used in the CSMA. To be specific, random waiting for a period of time is used.

Because collision (or conflict) avoidance in existing CSMA depends on a result of energy detection (or carrier sense), if the result of energy detection (or carrier sense) is that a channel is busy, backoff duration is prolonged, or if the result of energy detection (or carrier sense) is that a channel is idle, a radio frame is sent. However, in a scenario in which a hidden terminal exists, even if a result of energy detection (or carrier sense) is that a channel is idle, a collision (or conflict) may still occur. Therefore, in a conventional channel access technology, in the scenario in which a hidden terminal exists, there are problems of frequent collisions and performance deterioration.

### SUMMARY

Embodiments of this application provide a channel access method and a related apparatus, to reduce collisions or conflicts in a scenario in which a hidden terminal exists, and improve channel access performance.

The following describes this application from different aspects. It should be understood that, for the following implementations and beneficial effects of the different aspects, refer to each other.

According to a first aspect, this application provides a channel access method. The method is applied to a scenario in which a hidden terminal exists, and the method includes: A communication apparatus sends a first radio frame, and detects, within preset time after the sending, whether a response frame for the first radio frame is received. If no response frame for the first radio frame is received, the communication apparatus increases a value of a first backoff exponent, and performs backoff based on an increased value of the first backoff exponent; the communication apparatus performs clear channel assignment after the backoff is completed; and if a result of the clear channel assignment is that a channel is idle, the communication apparatus sends the first radio frame, or if a result of the clear channel assignment is that a channel is busy, the communication apparatus increases a value of a second backoff exponent and reperforms backoff; and/or if the response frame for the first radio frame is received, the communication apparatus sets the first backoff exponent to a minimum value of the first backoff exponent, and performs backoff based on a minimum value of the second backoff exponent; the communication apparatus performs clear channel assignment after the backoff is completed; and if a result of the clear channel assignment is that a channel is idle, the communication apparatus sends a second radio frame, or if a result of the clear channel assignment is that a channel is busy, the communication apparatus increases the value of the second backoff exponent and reperforms backoff.

The first backoff exponent may be used to reflect backoff caused by a collision, and the second backoff exponent may be used to reflect backoff caused when a result of clear channel assignment (clear channel assignment, CCA) is that a channel is busy.

It may be understood that there may be a plurality of backoff methods, for example, linear backoff or exponential backoff. A specific backoff method is not limited in this application.

In this application, when a corresponding response is not received after a radio frame is sent, that is, when a collision/conflict occurs, the value of the first backoff exponent is increased to increase a backoff window and perform backoff, so that in a scenario in which a hidden terminal exists, collisions or conflicts can be reduced, and channel access performance can be improved.

With reference to the first aspect, in a possible implementation, after the communication apparatus increases the value of the first backoff exponent, the method further includes: If the increased value of the first backoff exponent is less than or equal to a maximum value of the first backoff exponent, the communication apparatus performs backoff based on the increased value of the first backoff exponent.

Optionally, if the increased value of the first backoff exponent is greater than a maximum value of the first backoff exponent, the communication apparatus performs backoff based on the maximum value of the first backoff exponent.

With reference to the first aspect, in a possible implementation, the performing backoff based on an increased value of the first backoff exponent includes: assigning the increased value of the first backoff exponent to the second backoff exponent, and then performing backoff based on the value of the second backoff exponent. In other words, the value of the first backoff exponent affects the value of the second backoff exponent.

In this application, the value of the first backoff exponent is assigned to the second backoff exponent, and backoff is performed based on the second backoff exponent, to ensure continuity of the backoff window. This can prevent a case in which the backoff window increases due to a sending collision, but the backoff window decreases after CCA is performed.

With reference to the first aspect, in a possible implementation, the first backoff exponent may be the same as the second backoff exponent. When the first backoff exponent is the same as the second backoff exponent, no new backoff exponent is introduced in this application, so that implementation is simple, a quantity of parameters is small, and complexity is low.

With reference to the first aspect, in a possible implementation, after the communication apparatus sends the first radio frame, the method further includes: When the communication apparatus receives the response frame for the first radio frame after sending the first radio frame, the communication apparatus sets a value of a number of collisions counter to 0; or when the communication apparatus does not receive the response frame for the first radio frame after sending the first radio frame, the communication apparatus increases the value of the number of collisions counter.

Optionally, the communication apparatus resets the value of the number of collisions counter to 0 when an increased value of the number of collisions counter is greater than a preset threshold.

In this application, a new counter (the number of collisions counter) is used to record a number of backoff caused by a collision. A design is more flexible, and a record of an original number of backoff counter may not be affected.

Optionally, the number of collisions counter is a number of backoff counter. The number of backoff counter is used to record a number of backoff caused when a result of CCA is that a channel is busy.

In this application, the number of backoff counter is used to record all numbers of backoff, so that a delay of channel access once can be reduced in a scenario in which there are many collisions, and next channel access can be more quickly entered.

With reference to the first aspect, in a possible implementation, that the communication apparatus increases the value of the second backoff exponent and reperforms backoff includes: The communication apparatus increases the value of the second backoff exponent; and if an increased value of the second backoff exponent is less than or equal to a maximum value of the second backoff exponent, the communication apparatus reperforms backoff based on the increased value of the second backoff exponent; or if an increased value of the second backoff exponent is greater than a maximum value of the second backoff exponent, the communication apparatus reperforms backoff based on the maximum value of the second backoff exponent.

With reference to the first aspect, in a possible implementation, at least one of the minimum value of the first backoff exponent, the minimum value of the second backoff exponent, the maximum value of the first backoff exponent, and the maximum value of the second backoff exponent is predefined or preconfigured.

With reference to the first aspect, in a possible implementation, before the communication apparatus sends the first radio frame, the method further includes: The communication apparatus receives a configuration parameter from a central control node, where the configuration parameter includes one or more of the following: the minimum value of the first backoff exponent, the minimum value of the second backoff exponent, the maximum value of the first backoff exponent, or the maximum value of the second backoff exponent.

Optionally, the configuration parameter is carried in a radio broadcast frame.

According to a second aspect, this application provides a communication apparatus, including a transceiver unit and a processing unit. The transceiver unit is configured to send a first radio frame; and the processing unit is configured to: in a case in which no response frame for the first radio frame is received after the first radio frame is sent, increase a value of a first backoff exponent, perform backoff based on an increased value of the first backoff exponent, perform clear channel assignment after the backoff is completed, increase a value of a second backoff exponent and reperform backoff when a result of the clear channel assignment is that a channel is busy, and control the transceiver unit to send the first radio frame when the result of the clear channel assignment is that the channel is idle; and/or
the processing unit is further configured to: in a case in which a response frame for the first radio frame is received after the first radio frame is sent, set the first backoff exponent to a minimum value of the first backoff exponent, perform backoff based on a minimum value of the second backoff exponent, perform clear channel assignment after the backoff is completed, increase the value of the second backoff exponent and reperform backoff when a result of the clear channel assignment is that a channel is busy, and control the transceiver unit to send a second radio frame when the result of the clear channel assignment is that the channel is idle.

With reference to the second aspect, in a possible implementation, the processing unit is further configured to: when the increased value of the first backoff exponent is less than or equal to a maximum value of the first backoff exponent, perform backoff based on the increased value of the first backoff exponent.

With reference to the second aspect, in a possible implementation, the processing unit is further configured to perform backoff based on a maximum value of the first backoff exponent when the increased value of the first backoff exponent is greater than the maximum value of the first backoff exponent.

With reference to the second aspect, in a possible implementation, the processing unit is specifically configured to perform backoff based on the value of the second backoff exponent, where the value of the second backoff exponent is the increased value of the first backoff exponent.

With reference to the second aspect, in a possible implementation, the first backoff exponent is the same as the second backoff exponent.

With reference to the second aspect, in a possible implementation, the processing unit is further configured to: when the response frame for the first radio frame is received after the first radio frame is sent, set a value of a number of collisions counter to 0; and/or when no response frame for the first radio frame is received after the first radio frame is sent, increase the value of the number of collisions counter.

Optionally, the number of collisions counter is a number of backoff counter, and the number of backoff counter is used to record a number of backoff caused when a result of CCA is that a channel is busy.

Optionally, the processing unit is further configured to reset the value of the number of collisions counter to 0 when an increased value of the number of collisions counter is greater than a preset threshold.

With reference to the second aspect, in a possible implementation, the processing unit is specifically configured to: increase the value of the second backoff exponent; and when an increased value of the second backoff exponent is less than or equal to a maximum value of the second backoff exponent, reperform backoff based on the increased value of the second backoff exponent; or when an increased value of the second backoff exponent is greater than a maximum value of the second backoff exponent, reperform backoff based on the maximum value of the second backoff exponent.

With reference to the second aspect, in a possible implementation, at least one of the minimum value of the first backoff exponent, the minimum value of the second backoff exponent, the maximum value of the first backoff exponent, and the maximum value of the second backoff exponent is predefined or preconfigured.

With reference to the second aspect, in a possible implementation, the transceiver unit is further configured to receive a configuration parameter from a central control node, where the configuration parameter includes one or more of the following: the minimum value of the first backoff exponent, the minimum value of the second backoff exponent, the maximum value of the first backoff exponent, or the maximum value of the second backoff exponent.

Optionally, the configuration parameter is carried in a radio broadcast frame.

According to a third aspect, this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

With reference to the third aspect, in a possible implementation, the memory is located outside the communication apparatus.

With reference to the third aspect, in a possible implementation, the memory is located inside the communication apparatus.

In embodiments of this application, the processor and the memory may alternatively be integrated into one component. In other words, the processor and the memory may alternatively be integrated together.

With reference to the third aspect, in a possible implementation, the communication apparatus further includes a transceiver, and the transceiver is configured to receive a response frame or send a radio frame.

According to a fourth aspect, this application provides a communication apparatus. The communication apparatus includes a logic circuit and an interface, and the logic circuit is coupled to the interface. The interface is configured to output a first radio frame; and the logic circuit is configured to: in a case in which no response frame for the first radio frame is received after the first radio frame is sent, increase a value of a first backoff exponent, perform backoff based on an increased value of the first backoff exponent, perform clear channel assignment after the backoff is completed, increase a value of a second backoff exponent and reperform backoff when a result of the clear channel assignment is that a channel is busy, and control the interface to output the first radio frame when the result of the clear channel assignment is that the channel is idle; and/or
the logic circuit is further configured to: in a case in which a response frame for the first radio frame is received after the first radio frame is sent, set the first backoff exponent to a minimum value of the first backoff exponent, perform backoff based on a minimum value of the second backoff exponent, perform clear channel assignment after the backoff is completed, increase the value of the second backoff exponent and reperform backoff when a result of the clear channel assignment is that a channel is busy, and control the interface to output a second radio frame when the result of the clear channel assignment is that the channel is idle.

According to a fifth aspect, this application provides a computer-readable storage medium. The computer-readable storage medium is configured to store a computer program. When the computer program is run on a computer, the method according to any one of the first aspect or the possible implementations of the first aspect is performed.

According to a sixth aspect, this application provides a computer program product. The computer program product includes a computer program or computer code. When the computer program or the computer code is run on a computer, the method according to any one of the first aspect or the possible implementations of the first aspect is performed.

According to a seventh aspect, this application provides a computer program. When the computer program is run on a computer, the method according to any one of the first aspect or the possible implementations of the first aspect is performed.

For technical effects achieved in the foregoing aspects, refer to each other or refer to beneficial effects in the following method embodiments. Details are not described herein.

### BRIEF DESCRIPTION OF DRAWINGS

FIG. 1 is a diagram of a structure of a wireless communication system according to an embodiment of this application;
FIG. 2 is a diagram of another structure of a wireless communication system according to an embodiment of this application;
FIG. 3 is a schematic flowchart of a channel access method according to an embodiment of this application;
FIG. 4 is a diagram of a scenario in which a hidden terminal exists according to an embodiment of this application;
FIG. 5 is another schematic flowchart of a channel access method according to an embodiment of this application;
FIG. 6A and FIG. 6B are a diagram of a channel access procedure according to an embodiment of this application;
FIG. 7A and FIG. 7B are another diagram of a channel access procedure according to an embodiment of this application;
FIG. 8A and FIG. 8B are still another diagram of a channel access procedure according to an embodiment of this application;
FIG. 9 is a diagram of simulation of beneficial effects according to an embodiment of this application;
FIG. 10 is a diagram of a structure of a communication apparatus according to an embodiment of this application;
FIG. 11 is a diagram of a structure of a communication apparatus 1000 according to an embodiment of this application; and
FIG. 12 is a diagram of another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may indicate a, b, c, a and b, a and c, b and c, or a, b, and c. Herein, a, b, and c may be singular or plural.

In this application, terms "first", "second", and the like are intended to distinguish between different objects but do not indicate a particular order of the objects. In addition, terms "include", "have", and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, words such as "for example" or "such as" indicate an example, an instance, or descriptions. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

In addition, terms "system" and "network" may be used interchangeably in this specification.

It should be understood that, in embodiments of this application, determining B based on A does not mean that B is determined only based on A, and B may alternatively be determined based on A and/or other information.

The technical solutions provided in this application are applicable to various networks in an unlicensed spectrum. Examples are not listed one by one herein. For example, the technical solutions provided in this application are applicable to a wireless personal area network (wireless personal area network, WPAN) based on an ultra-wideband (ultra-wideband, UWB) technology. For example, a method provided in this application is applicable to Institute of Electrical and Electronics Engineers (Institute of Electrical and Electronics Engineers, IEEE) 802.15 series protocols, such as an 802.15.4ab protocol, a future-generation UWB WPAN standard, or the like. Examples are not listed one by one herein. For another example, the technical solutions provided in this application are further applicable to a wireless local area network (wireless local area network, WLAN) based on 802.11 series protocols. For example, the method provided in this application is applicable to 802.11ax, 802.11be, or a next generation thereof, for example, Wi-Fi 8 (also referred to as ultra high reliability (ultra high reliability, UHR) or ultra high reliability and throughput (ultra high reliability and throughput, UHRT)). Examples are not listed one by one herein.

It should be understood that the network architecture described in embodiments of this application is intended to describe the technical solutions in embodiments of this application more clearly, and does not constitute a limitation on the technical solutions provided in embodiments of this application. A person of ordinary skill in the art may know that, as a network architecture evolves, the technical solutions provided in embodiments of this application are also applicable to a similar technical problem.

In embodiments of this application, a UWB communication scenario in a wireless personal area network is used as an example to describe some scenarios. It should be understood that the solutions in embodiments of this application may be further applied to another wireless communication network, and a corresponding name may also be replaced with a name of a corresponding function in the another wireless communication network.

The UWB technology is a new wireless communication technology. In the UWB technology, data is transmitted through a nanosecond-level non-sinusoidal narrow pulse, and modulation is performed on impulses with very steep rise and fall time, and therefore, the UWB technology occupies a wide spectrum range, so that a signal has a bandwidth of a Giga Hertz (GHz) magnitude. A bandwidth used by UWB is usually higher than 1 GHz. A UWB system does not need to generate a sinusoidal carrier signal and can directly transmit an impulse sequence. Therefore, the UWB system has a wide spectrum and low average power. A UWB wireless communication system has advantages such as a strong multi-path resolution capability, low power consumption, and high confidentiality. This facilitates coexistence with other systems, thereby improving spectrum utilization and system capacity. In addition, in a short-range communication application, transmit power of a UWB transmitter may be usually lower than 1 mW (milliwatt). Theoretically, interference generated from a UWB signal is only equivalent to white noise. This facilitates good coexistence between ultra-wideband and existing narrowband communication. Therefore, the UWB system and a narrowband (narrowband, NB) communication system can simultaneously operate without interfering with each other.

The method provided in this application may be implemented by a communication apparatus in a wireless communication system. In a communication apparatus, an apparatus or a chip for implementing a function of a UWB system may be referred to as a UWB module, and an apparatus or a chip for implementing a function of a narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes the UWB module and/or the narrowband communication module.

It may be understood that, in this application, narrowband is relative to UWB. Any communication system that operates in a bandwidth narrower than that of the UWB may be referred to as the narrowband communication system. Certainly, the narrowband communication system may have another meaning. This is not limited in this application. However, a communication bandwidth of the narrowband communication system may be narrower than a communication bandwidth of the UWB system. It may also be understood that the communication bandwidth of the narrowband communication system is usually unlicensed national information infrastructure (unlicensed national information infrastructure, UNII-3) and UNII-5.

Embodiments of this application are mainly described by using a WPAN, for example, a network used in IEEE 802.15 series standards, as an example. However, a person skilled in the art easily understands that, various aspects in this application may be extended to another network using various standards or protocols, for example, a wireless local area network (wireless local area network, WLAN), Bluetooth (Bluetooth), Zigbee (Zigbee protocol), a high performance radio LAN (high performance radio LAN, HIPERLAN) (a wireless standard similar to the IEEE 802.11 standard, mainly used in Europe), a wide area network (WAN), or another network that is known currently or developed in the future. Therefore, regardless of used coverage and a used wireless access protocol, various aspects provided in this application are applicable to any appropriate wireless network.

The method provided in this application may be implemented by a communication apparatus in a wireless communication system. The communication apparatus may be an apparatus in a UWB system or a WLAN. For example, the communication apparatus may include but is not limited to a communication server, a router, a switch, a bridge, a computer, a mobile phone, and the like. For another example, the communication apparatus may include user equipment (user equipment, UE). The user equipment may include various handheld devices, a vehicle-mounted device (for example, a vehicle or a component mounted in a vehicle), a wearable device, an internet of things (internet of things, IoT) device, a computing device, or another processing device connected to a wireless modem. Examples are not listed one by one herein. For another example, the communication apparatus may include a central control node, for example, a personal area network (personal area network, PAN) or a PAN coordinator. The PAN coordinator or the PAN may be a mobile phone, a vehicle-mounted device, an anchor (Anchor), a tag (tag), a smart home, or the like. For another example, the communication apparatus may be an access point (access point, AP) or a station (station, STA) in a WLAN. For another example, the communication apparatus may include a chip, and the chip may be disposed in a communication server, a router, a switch, a terminal device, or the like. Examples are not listed one by one herein. It can be understood that the foregoing descriptions about the communication apparatus are applicable to the communication apparatus in this application.

Optionally, the communication apparatus in embodiments of this application may be a device that supports a plurality of WPAN standards, such as IEEE 802.15.4ab that is currently being discussed or a later version.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

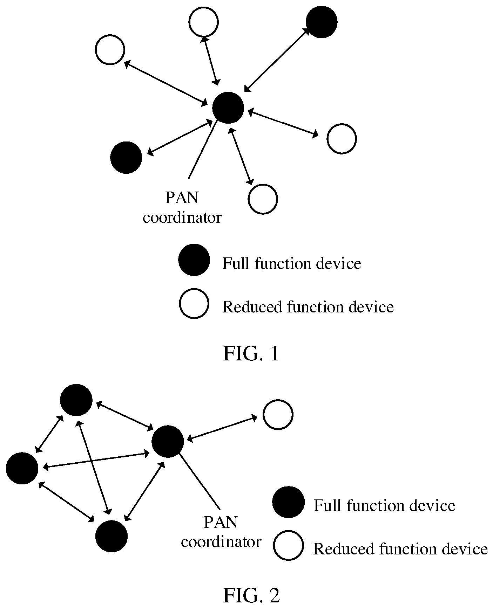

For example, FIG. 1 is a diagram of a structure of a wireless communication system according to an embodiment of this application. As shown in FIG. 1, the wireless communication system is of a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is of a peer-to-peer topology structure. In this structure, a central control node (for example, a PAN coordinator in FIG. 2) may perform data communication with one or more other devices, and other different devices may also perform data communication with each other. In FIG. 1 and FIG. 2, both a full function device (full function device, FFD) and a reduced function device (reduced function device) may be understood as communication apparatuses shown in this application. The full function device is relative to the reduced function device. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 2 is merely an example, and each of the other three full function devices shown in FIG. 2 may also be used as a PAN coordinator. Examples are not shown one by one herein. It may be further understood that the full function device and the reduced function device in this application are merely examples of the communication apparatus, and any apparatus that can implement the channel access method provided in this application falls within the protection scope of this application.

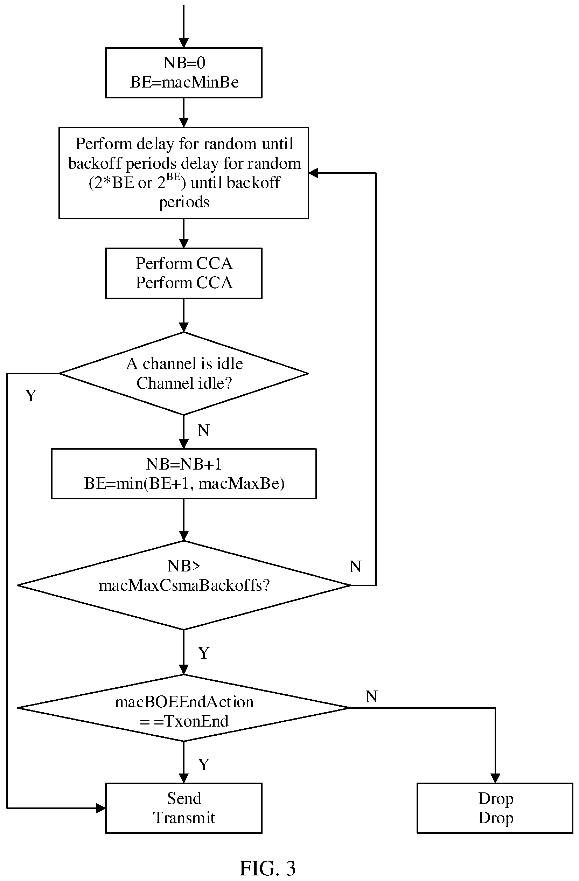

A possible channel access method is shown in FIG. 3. FIG. 3 is a schematic flowchart of a channel access method according to an embodiment of this application. When there is a to-be-sent data packet in a communication apparatus operating in an unlicensed spectrum, the communication apparatus may perform channel access. As shown in FIG. 3, the channel access method may include the following steps.
(1) Initialize a number of backoff (number of backoff, NB) counter and a backoff exponent (backoff exponent, BE). In other words, NB=0, and BE is initialized to a minimum value, namely, macMinBe. The number of backoff NB counter is used to record a number of backoff caused when a result of clear channel assignment (clear channel assignment, CCA) is that a channel is busy. The backoff exponent BE is used to calculate a length of a backoff window (or referred to as a backoff period, backoff periods). It may be understood that the backoff exponent in this application may also be referred to as a backoff factor.
(2) Perform random backoff, for example, perform delay for random until backoff periods (delay for random (2*BE or 2^{BE}) until backoff periods). A backoff method may be either or both of linear backoff (for example, 2*BE) and exponential backoff (for example, 2^{BE}). Backoff means random waiting for a period of time. It may be understood that, if linear backoff is used, a length of the backoff window (or duration of the backoff period) is equal to 2*BE; and if exponential backoff is used, a length of the backoff window (or duration of the backoff period) is 2^{BE}.
(3) Perform clear channel assignment (clear channel assignment, CCA) after the backoff is completed. For example, whether a channel is occupied (in other words, whether the channel is busy) is determined through energy detection (or carrier sense). If a result of the CCA is that the channel is idle, in other words, the channel is not occupied, a data packet may be sent (transmitted). If a result of the CCA is that the channel is busy, in other words, the channel is occupied, both the backoff exponent BE and the NB counter increase, for example, BE=min(BE+1, macMaxBe) and NB=NB+1. Herein, macMaxBe is a maximum value of the backoff exponent BE. min(x, y) indicates that a minimum value in x and y is selected. A same expression in the following indicates a same meaning, and details are not described one by one.
(4) Determine whether a value of the NB counter exceeds a preset threshold (macMaxCsmaBackoffs); and if the value of the NB counter does not exceed the preset threshold, that is, NB≤macMaxCsmaBackoffs, reperform backoff, that is, repeat step (2) and step (3); or if the value of the NB counter exceeds the preset threshold, that is, NB>macMaxCsmaBackoffs, determine whether to send (transmit) or drop (drop) the data packet based on a determining condition (that is, whether parameters macBOEEndAction and TxonEnd are equal); and if macBOEEndAction is equal to TxonEnd, send the data packet; or if macBOEEndAction is not equal to TxonEnd, drop the data packet.

In this application, "drop (drop) the data packet" may be understood as that the data packet is no longer transmitted in current channel access. Whether the data packet is transmitted in next channel access is not limited in this application. Similar expressions in the following represent similar meanings, and details are not described one by one.

It may be understood that in FIG. 3, "Y" represents "yes (yes)" and "N" represents "no (no)".

Optionally, the minimum value of the backoff exponent BE (namely, macMinBe), the maximum value of the backoff exponent BE (namely, macMaxBe), the preset threshold (namely, macMaxCsmaBackoffs), macBOEEndAction, and TxonEnd are all configuration parameters at a medium access control (medium access control, MAC) layer, and are generally configured by an upper layer.

It may be understood that an objective of determining whether macBOEEndAction is equal to TxonEnd is to select sending or directly dropping when a result of performing carrier sense for a long time is that a channel is busy and sending cannot be performed. Generally, it is proper to select dropping, because that a result of carrier sense is that a channel is busy indicates that another user is performing sending. If direct sending is performed, collisions may increase, and performance may deteriorate.

It may be learned from the channel access method shown in FIG. 3 that collision (or conflict) avoidance depends on a result of energy detection (or carrier sense). If the result of energy detection (or carrier sense) is that a channel is busy, backoff duration is prolonged (for example, the backoff exponent BE increases); or if the result of energy detection (or carrier sense) is that a channel is idle, a radio frame is sent. However, in a scenario in which a hidden terminal exists, even if a result of energy detection (or carrier sense) is that a channel is idle, a collision (or conflict) may still occur.

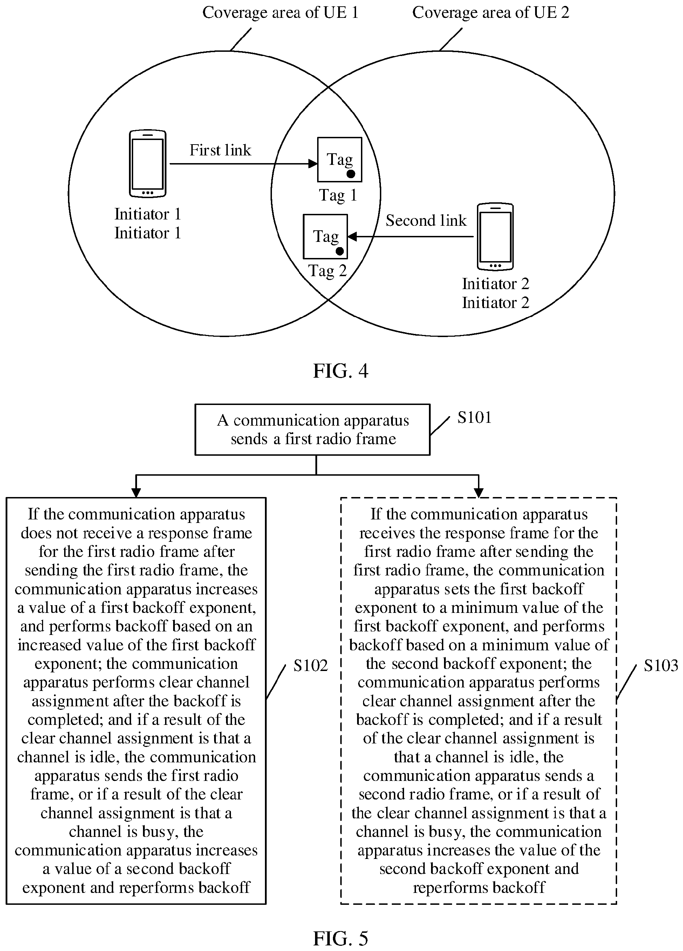

FIG. 4 is a diagram of a scenario in which a hidden terminal exists according to an embodiment of this application. As shown in FIG. 4, the scenario includes an initiator 1 (Initiator 1), an initiator 2 (Initiator 2), a tag 1, and a tag 2. A coverage area of the Initiator 1 partially overlaps a coverage area of the Initiator 2, and the tag 1 and the tag 2 are located in an overlapping area. The Initiator 1 is located outside the coverage area of the Initiator 2, and for the Initiator 2, the Initiator 1 is a hidden terminal. The Initiator 2 is located outside the coverage area of the Initiator 1, and for the Initiator 1, the Initiator 2 is a hidden terminal. It is assumed that the Initiator 1 needs to send information to the tag 1 via a first link, and the Initiator 2 needs to send information to the tag 2 via a second link. In this case, the Initiator 1 and the Initiator 2 separately perform channel access. However, because the Initiator 2 is located outside the coverage area of the Initiator 1, when determining, through energy detection (or carrier sense), whether a channel is idle, the Initiator 1 can only detect whether the tag 1 and the tag 2 have sending behaviors (in other words, whether the tag 1 and the tag 2 occupy the channel). Similarly, because the Initiator 1 is located outside the coverage area of the Initiator 2, when determining, through energy detection (or carrier sense), whether a channel is idle, the Initiator 2 can also only detect whether the tag 1 and the tag 2 have sending behaviors (in other words, whether the channel is occupied). If neither the tag 1 nor the tag 2 has a sending behavior (in other words, the channel is not occupied), a result of energy detection (or carrier sense) of the Initiator 1 is that the channel is idle, and a result of energy detection (or carrier sense) of the Initiator 2 is also that the channel is idle. In this case, it is very likely that when the Initiator 1 sends information to the tag 1, the Initiator 2 also sends information to the tag 2. Consequently, a collision occurs. In other words, the collision occurs when the first link and the second link are simultaneously used for sending.

In view of this, embodiments of this application provide another channel access method, to reduce collisions or conflicts in the scenario in which the hidden terminal exists (for example, the scenario shown in FIG. 4) or another scenario in which a collision may exist, and improve channel access performance.

The following describes in detail the technical solutions provided in this application with reference to more accompanying drawings.

In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application. It should be understood that a sequence of the following embodiments does not represent a degree of importance.

A communication apparatus in this application may support the 802.15.4ab standard or a next-generation standard of 802.15.4ab, may support a plurality of standards such as 802.15.4a, 802.15.4-2011, 802.15.4-2015, 802.15.4-2020, and 802.15.4z, and may further support WLAN standards of an 802.11 family such as 802.11ax, 802.11ac, 802.11n, 802.11g, 802.11b, 802.11a, 802.11be, and a next generation of 802.11be.

FIG. 5 is another schematic flowchart of a channel access method according to an embodiment of this application. The method may be applied to the scenario in which the hidden terminal exists shown in FIG. 4. A communication apparatus in the method may be the Initiator 1 or the Initiator 2 in FIG. 4. As shown in FIG. 5, the channel access method includes but is not limited to the following steps.

S101: The communication apparatus sends a first radio frame.

Optionally, the communication apparatus in embodiments of this application performs communication in an unlicensed spectrum. Before sending the first radio frame, the communication apparatus may perform channel access. In a channel access process, if a result of clear channel assignment (CCA) is idle, the communication apparatus sends the first radio frame. Alternatively, when a value of a number of backoff (NB) counter exceeds a preset threshold, it is determined, based on a determining condition (for example, when parameters macBOEEndAction and TxonEnd are equal), to send the first radio frame, and the communication apparatus sends the first radio frame. Alternatively, in another case, the communication apparatus sends the first radio frame. A condition for sending the first radio frame by the communication apparatus is not limited in embodiments of this application.

Optionally, the first radio frame may be a radio frame in 802.15 series protocols, or may be a radio frame in 802.11 series protocols. This is not limited in embodiments of this application. Optionally, the first radio frame may be a radio frame with a response mechanism. In other words, an apparatus that receives the first radio frame needs to feed back a corresponding response frame, for example, an acknowledgement (acknowledgement, ACK) frame or block acknowledgement (block ACK, BA), so that the communication apparatus that sends the first radio frame confirms that the peer party has correctly received the first radio frame.

S102: If the communication apparatus does not receive a response frame for the first radio frame after sending the first radio frame, the communication apparatus increases a value of a first backoff exponent, and performs backoff based on an increased value of the first backoff exponent; the communication apparatus performs clear channel assignment after the backoff is completed; and if a result of the clear channel assignment is that a channel is idle, the communication apparatus sends the first radio frame, or if a result of the clear channel assignment is that a channel is busy, the communication apparatus increases a value of a second backoff exponent and reperforms backoff.

For example, if the communication apparatus does not receive the response frame for the first radio frame after sending the first radio frame, it may also be understood as that the communication apparatus determines, after sending the first radio frame, that no response frame for the first radio frame is received.

Optionally, the channel access method further includes:
S103: If the communication apparatus receives the response frame for the first radio frame after sending the first radio frame, the communication apparatus sets the first backoff exponent to a minimum value of the first backoff exponent, and performs backoff based on a minimum value of the second backoff exponent; the communication apparatus performs clear channel assignment after the backoff is completed; and if a result of the clear channel assignment is that a channel is idle, the communication apparatus sends a second radio frame, or if a result of the clear channel assignment is that a channel is busy, the communication apparatus increases the value of the second backoff exponent and reperforms backoff.

For example, if the communication apparatus receives the response frame for the first radio frame after sending the first radio frame, it may also be understood as that the communication apparatus determines, after sending the first radio frame, that the response frame for the first radio frame is received.

Optionally, after sending the first radio frame, the communication apparatus may detect, within preset time, whether the response frame for the first radio frame is received. The preset time may be time specified in a standard protocol, for example, a short interframe space (short interframe space, SIFS), or the preset time may be determined by two communication parties through negotiation, or the preset time may be preconfigured by a central control node (for example, a PAN coordinator or an AP). This is not limited in embodiments of this application.

If the communication apparatus does not receive, within the preset time after sending the first radio frame, the response frame for the first radio frame, it indicates that the first radio frame fails to be sent (or that a collision/conflict occurs in current transmission). In this case, the communication apparatus may increase the value of the first backoff exponent, and perform backoff based on the increased value of the first backoff exponent. The first backoff exponent may be used to reflect backoff caused by a collision. For ease of description, the following uses BF to represent the first backoff exponent. Certainly, the first backoff factor may also be represented in another manner. For example, to distinguish from the second backoff factor, the first backoff factor may also be represented by BE', BE2, or the like. For example, if the increased value of the first backoff exponent is less than or equal to the maximum value of the first backoff exponent, the communication apparatus may perform backoff based on the increased value of the first backoff exponent; or if the increased value of the first backoff exponent is greater than the maximum value of the first backoff exponent, the communication apparatus may perform backoff based on the maximum value of the first backoff exponent. In other words, the communication apparatus performs backoff based on the value of the first backoff exponent. The value of the first backoff exponent (BF) satisfies BF=min(BF+1, macMaxBF), and macMaxBF represents the maximum value of the first backoff exponent. After the backoff is completed, the communication apparatus may perform CCA. If a result of the CCA is that a channel is idle, the communication apparatus sends the first radio frame or another radio frame. If the result of the CCA is that the channel is busy, the communication apparatus increases the value of the second backoff exponent and reperforms backoff. The second backoff exponent may be used to reflect backoff caused when the result of the CCA is that the channel is busy. For ease of description, the following uses BF to represent the second backoff exponent. For example, when the result of the CCA is that the channel is busy, the communication apparatus increases the value of the second backoff exponent; and if an increased value of the second backoff exponent is less than or equal to a maximum value of the second backoff exponent, the communication apparatus may reperform backoff based on the increased value of the second backoff exponent; or if an increased value of the second backoff exponent is greater than a maximum value of the second backoff exponent, the communication apparatus may reperform backoff based on the maximum value of the second backoff exponent. In other words, when the result of the CCA is that the channel is busy, the communication apparatus reperforms backoff based on the value of the second backoff exponent. The value of the second backoff exponent (BE) satisfies BE=min(BE+1, macMaxBe), and macMaxBe represents the maximum value of the second backoff exponent.

Optionally, if the communication apparatus receives, within the preset time after sending the first radio frame, the response frame for the first radio frame, it indicates that the first radio frame is successfully sent (or that no collision/conflict occurs in current transmission). In this case, the communication apparatus sets the first backoff exponent (BF) to the minimum value of the first backoff exponent, and performs backoff based on the minimum value of the second backoff exponent (BE). After the backoff is completed, the communication apparatus may perform the CCA. If the result of the CCA is that the channel is idle, the communication apparatus sends the second radio frame. If the result of the CCA is that the channel is busy, the communication apparatus increases the value of the second backoff exponent and reperforms backoff. The second radio frame may be the same as or different from the first radio frame. The second radio frame may also be a radio frame with a response mechanism.

Optionally, there may be a plurality of backoff methods, for example, linear backoff, exponential backoff, or other backoff (for example, any monotonically increasing function backoff). A specific backoff method is not limited in embodiments of this application. When linear backoff is used, a length of a backoff window may be 2*BF or 2*BE. When exponential backoff is used, a length of a backoff window may be 2^{BF} or 2^{BE}. When another backoff method is used, a length of a backoff window may be f(BF) or f(BE), where f(x) represents a monotonically increasing function.

Optionally, the first backoff exponent may be different from or the same as the second backoff exponent. With reference to examples, the following specifically describes a channel access procedure when the first backoff exponent is different from the second backoff exponent, and a channel access procedure when the first backoff exponent is the same as the second backoff exponent.

Implementation 1: The first backoff exponent is different from the second backoff exponent.

In a possible implementation, the performing backoff based on the increased value of the first backoff exponent includes: The communication apparatus assigns the increased value of the first backoff exponent to the second backoff exponent, and then performs backoff based on the value of the second backoff exponent. In other words, the value of the first backoff exponent (BF) affects the value of the second backoff exponent (BE).

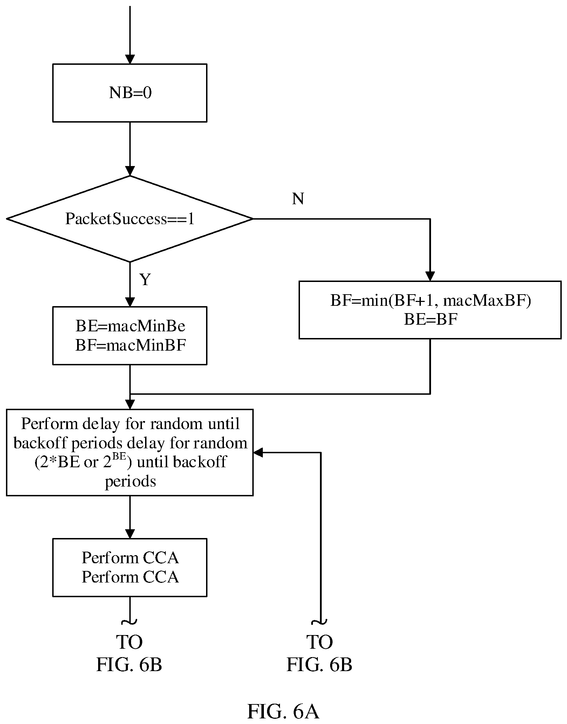

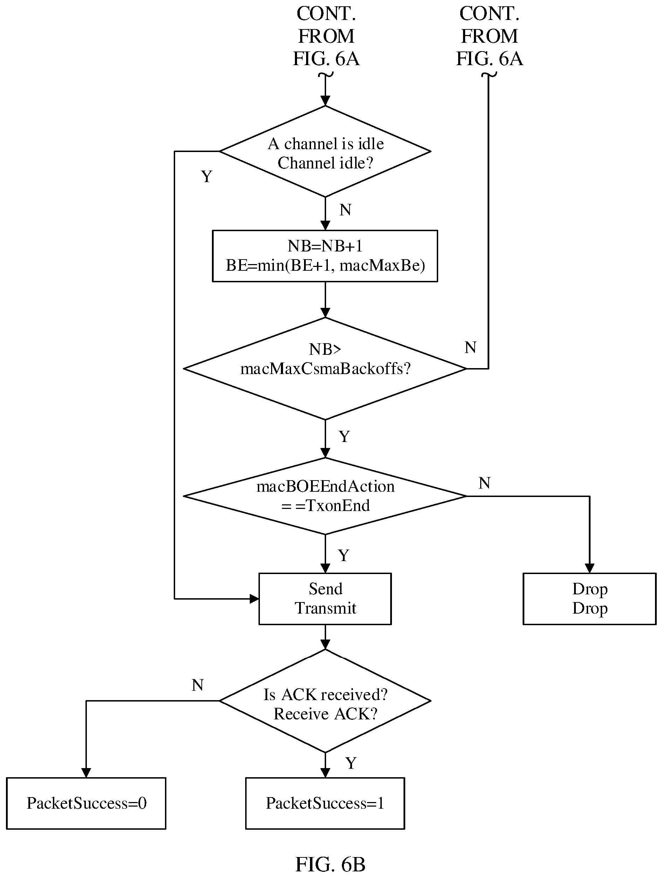

For example, FIG. 6A and FIG. 6B are a diagram of a channel access procedure according to an embodiment of this application. It may be understood that in FIG. 6A and FIG. 6B, "Y" represents "yes (yes)" and "N" represents "no (no)". When there is a to-be-sent radio frame in a communication apparatus, the communication apparatus may enter a channel access procedure. As shown in FIG. 6A and FIG. 6B, the channel access procedure includes the following steps.
(1) Initialize a number of backoff (NB) counter, that is, NB=0.
(2) Determine whether previous transmission succeeds, that is, whether a parameter PacketSuccess (a data packet success flag, a data packet sending success flag, or the like) is equal to 1. The parameter PacketSuccess may indicate whether previous transmission succeeds, or indicate whether a response frame for a sent radio frame is received. If the parameter PacketSuccess is equal to 1, it indicates that the previous transmission succeeds. If the parameter PacketSuccess is not equal to 1, it indicates that the previous transmission fails. Specifically, for example, a first radio frame is sent in the previous transmission. If a response frame corresponding to the first radio frame is received within preset time, it indicates that the sending succeeds, and the parameter PacketSuccess may be set to 1. If the response frame corresponding to the first radio frame is not received within the preset time, it indicates that the sending fails, and the parameter PacketSuccess may be set to 0.
(3) If the previous transmission succeeds, that is, the parameter PacketSuccess is equal to 1, initialize a first backoff exponent (BF) and a second backoff exponent (BE), for example, BF=macMinBF, and BE=macMinBe, where macMinBF is a minimum value of the first backoff exponent, and macMinBe is a minimum value of the second backoff exponent. If the previous transmission fails, that is, the parameter PacketSuccess is not equal to 1, BF is set to min(BF+1, macMaxBF) and then BF is assigned to BE, that is, BE=BF, where macMaxBF is a maximum value of the first backoff exponent.
(4) Perform random backoff, for example, delay for random until backoff periods (delay for random (2*BE or 2^{BE}) until backoff periods). A length of a backoff window (or duration of a backoff period) is 2*BE or 2^{BE}.
(5) Perform CCA after the backoff is completed. If a result of the CCA is that a channel is idle, that is, the channel is not occupied, a radio frame may be sent (transmitted). If the result of the CCA is that the channel is busy, that is, the channel is occupied, both the second backoff exponent (BE) and the number of backoff (NB) counter increase, for example, BE=min(BE+1, macMaxBe) and NB=NB+1, where macMaxBe is a maximum value of the second backoff exponent.
(6) Determine whether a value of the number of backoff (NB) counter exceeds a preset threshold (macMaxCsmaBackoffs); and if the value of the NB counter does not exceed the preset threshold, that is, NB≤macMaxCsmaBackoffs, reperform backoff, that is, repeat step (4) and step (5); or if the value of the NB counter exceeds the preset threshold, that is, NB>macMaxCsmaBackoffs, determine whether to send (transmit) or drop (drop) the radio frame based on a determining condition (that is, whether parameters macBOEEndAction and TxonEnd are equal); and if macBOEEndAction is equal to TxonEnd, send the radio frame; or if macBOEEndAction is not equal to TxonEnd, drop the radio frame.
(7) Determine whether a response frame (for example, ACK) for the radio frame is received after the radio frame is sent. If the response frame for the radio frame is received within the preset time, the parameter PacketSuccess is set to 1; or if the response frame for the radio frame is not received within the preset time, the parameter PacketSuccess is set to 0. It may be understood that whether the parameter PacketSuccess is set to 1 when the response frame is received or the parameter PacketSuccess is set to 1 when the response frame is not received is not limited in embodiments of this application. This is merely an example for description herein. In an actual application, the parameter PacketSuccess may also be set to 0 when the response frame is received, and the parameter PacketSuccess is set to 1 when the response frame is not received. Correspondingly, step (2) is to determine whether the parameter PacketSuccess is equal to 0.

Optionally, the maximum value macMaxBe of the second backoff exponent and the maximum value macMaxBF of the first backoff exponent may be set to a same value, or may be set to different values. The minimum value macMinBF of the first backoff exponent and the minimum value macMinBe of the second backoff exponent may be set to a same value, or may be set to different values.

In embodiments of this application, when a collision occurs (that is, no response frame is received after sending is performed), the backoff window is increased by increasing the value of BF. In a scenario in which a hidden terminal exists, collisions or conflicts can be reduced, and channel access performance can be improved. In addition, in embodiments of this application, the value of BF is assigned to BE, to ensure continuity of the backoff window, so that a case in which the backoff window is increased due to a sending collision, but the backoff window is decreased after CCA is performed can be avoided.

In another possible implementation, the first backoff exponent and the second backoff exponent are independent of each other. In other words, the value of the first backoff exponent (BF) does not affect the value of the second backoff exponent (BE).

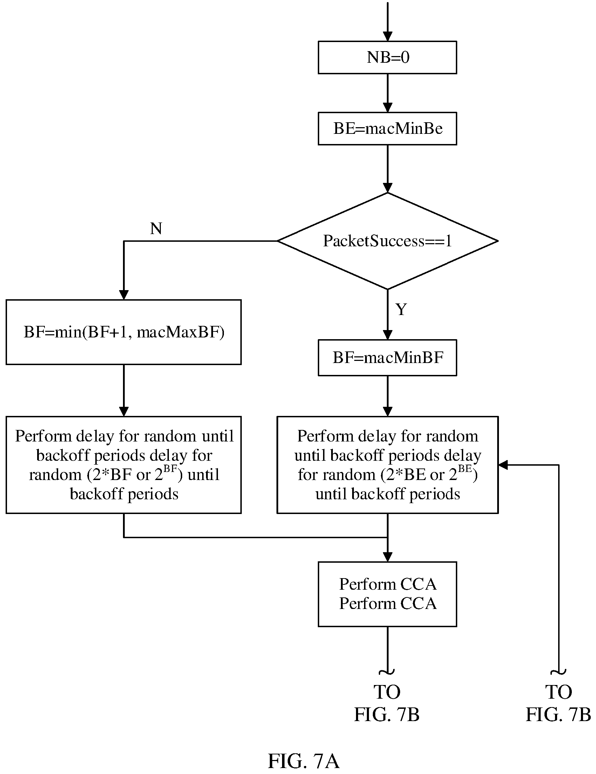

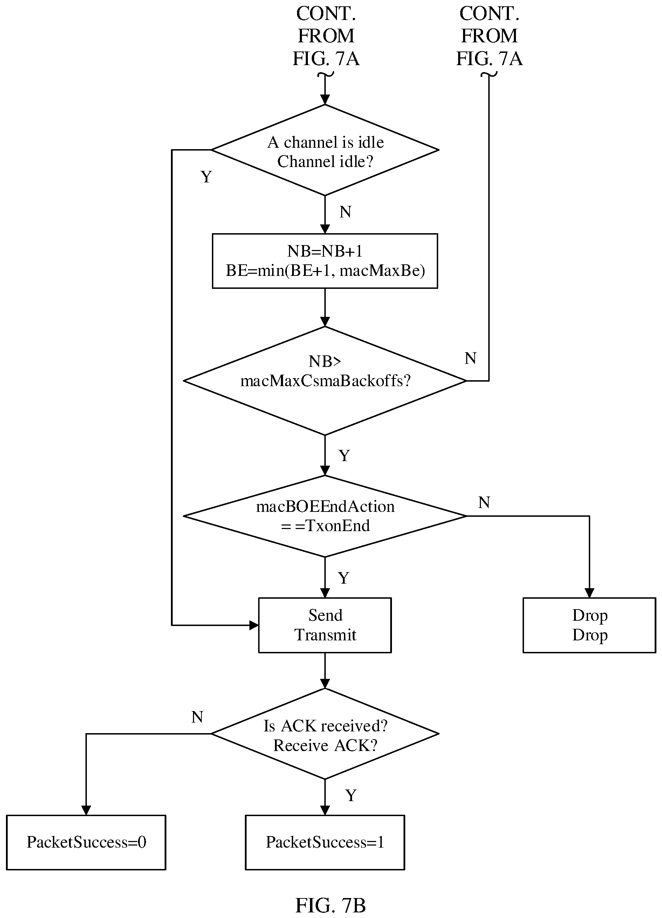

For example, FIG. 7A and FIG. 7B are another diagram of a channel access procedure according to an embodiment of this application. It may be understood that in FIG. 7A and FIG. 7B, "Y" represents "yes (yes)" and "N" represents "no (no)". When there is a to-be-sent radio frame in a communication apparatus, the communication apparatus may enter a channel access procedure. As shown in FIG. 7A and FIG. 7B, the channel access procedure includes the following steps.
(1) Initialize a number of backoff (NB) counter and a second backoff exponent (BE), that is, NB=0, and BE=macMinBF, where macMinBe is a minimum value of the second backoff exponent.
(2) Determine whether previous transmission succeeds, that is, whether a parameter PacketSuccess is equal to 1. If the parameter PacketSuccess is equal to 1, it indicates that the previous transmission succeeds. If the parameter PacketSuccess is not equal to 1, it indicates that the previous transmission fails. Specifically, for example, a first radio frame is sent in the previous transmission. If a response frame corresponding to the first radio frame is received within preset time, it indicates that the sending succeeds, and the parameter PacketSuccess may be set to 1. If the response frame corresponding to the first radio frame is not received within the preset time, it indicates that the sending fails, and the parameter PacketSuccess may be set to 0.
(3) If the previous transmission succeeds, that is, the parameter PacketSuccess is equal to 1, initialize the first backoff exponent (BF), for example, BF=macMinBF, where macMinBF is a minimum value of the first backoff exponent. After the first backoff exponent (BF) is initialized, random backoff is performed based on a value of the second backoff exponent (BE), that is, delay for random until backoff periods (delay for random (2*BE or 2^{BE}) until backoff periods) is performed. A length of a backoff window (or duration of a backoff period) is 2*BE or 2^{BE}.
(4) If the previous transmission fails, that is, the parameter PacketSuccess is not equal to 1, perform random backoff based on a value of a first backoff exponent (BF) after BF=min(BF+1, macMaxBF) is performed, that is, perform delay for random until backoff periods (delay for random (2*BE or 2^{BE}) until backoff periods), where a length of a backoff window (or duration of a backoff period) is 2*BF or 2^{BF}, and macMaxBF is a maximum value of the first backoff exponent.
(5) Perform CCA after the backoff is completed. If a result of the CCA is that a channel is idle, that is, the channel is not occupied, a radio frame may be sent (transmitted). If the result of the CCA is that the channel is busy, that is, the channel is occupied, both the second backoff exponent (BE) and the number of backoff (NB) counter increase, for example, BE=min(BE+1, macMaxBe) and NB=NB+1, where macMaxBe is a maximum value of the second backoff exponent.
(6) Determine whether a value of the number of backoff (NB) counter exceeds a preset threshold (macMaxCsmaBackoffs); and if the value of the NB counter does not exceed the preset threshold, that is, NB≤macMaxCsmaBackoffs, reperform backoff, that is, repeat step (4) and step (5); or if the value of the NB counter exceeds the preset threshold, that is, NB>macMaxCsmaBackoffs, determine whether to send (transmit) or drop (drop) the radio frame based on a determining condition (that is, whether parameters macBOEEndAction and TxonEnd are equal); and if macBOEEndAction is equal to TxonEnd, send the radio frame; or if macBOEEndAction is not equal to TxonEnd, drop the radio frame.
(7) Determine whether a response frame (for example, ACK) for the radio frame is received after the radio frame is sent. If the response frame for the radio frame is received within the preset time, the parameter PacketSuccess is set to 1; or if the response frame for the radio frame is not received within the preset time, the parameter PacketSuccess is set to 0. It may be understood that whether the parameter PacketSuccess is set to 1 when the response frame is received or the parameter PacketSuccess is set to 1 when the response frame is not received is not limited in embodiments of this application. This is merely an example for description herein.

Optionally, the maximum value macMaxBe of the second backoff exponent and the maximum value macMaxBF of the first backoff exponent may be set to a same value, or may be set to different values. The minimum value macMinBF of the first backoff exponent and the minimum value macMinBe of the second backoff exponent may be set to a same value, or may be set to different values.

In embodiments of this application, when a collision occurs (that is, no response frame is received after sending is performed), a value of BF is increased to increase a backoff window, so that in a scenario in which a hidden terminal exists, collisions or conflicts are reduced, and channel access performance is improved. In addition, in embodiments of this application, backoff caused by a collision is separated from backoff caused when a result of CCA is that a channel is busy, so that independence of the two backoff mechanisms can be ensured, and a delay can be reduced in a scenario in which there are many collisions.

Optionally, in FIG. 6A, FIG. 6B, FIG. 7A, and FIG. 7B, at least one of macMinBF, macMinBe, macMaxBe, or macMaxBF may be predefined or preconfigured. In an example, at least one of macMinBF, macMinBe, macMaxBe, or macMaxBF may be configured by both communication parties through interaction by using a new information element (information element, IE) or by reusing an existing information element IE. In another example, at least one of macMinBF, macMinBe, macMaxBe, or macMaxBF may be configured by a central control node (for example, a full function device) for another node by using a radio broadcast frame. For example, the communication apparatus may receive a configuration parameter from the central control node, where the configuration parameter includes one or more of the following: macMinBF, macMinBe, macMaxBe, or macMaxBF. The configuration parameter may be carried in a radio broadcast frame.

Implementation 2: The first backoff exponent is the same as the second backoff exponent.

When the first backoff exponent is the same as the second backoff exponent, the second backoff exponent (BE) is used to reflect backoff caused by a collision, and is also used to reflect backoff caused when a result of CCA is that a channel is busy.

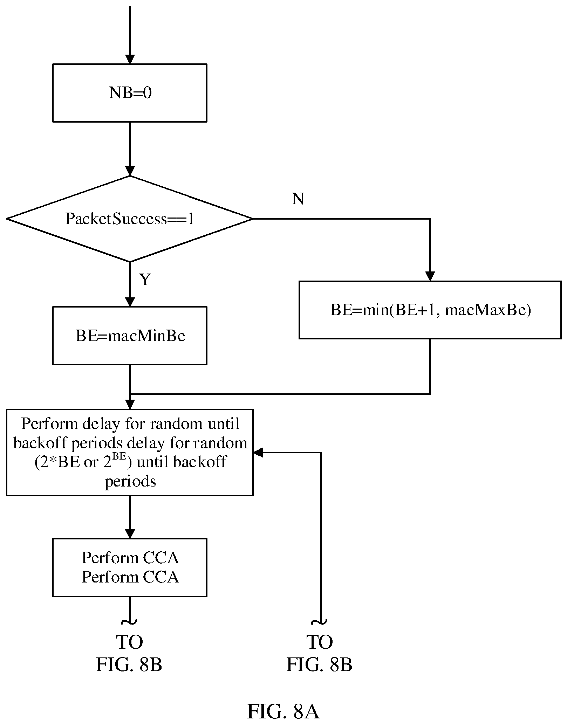

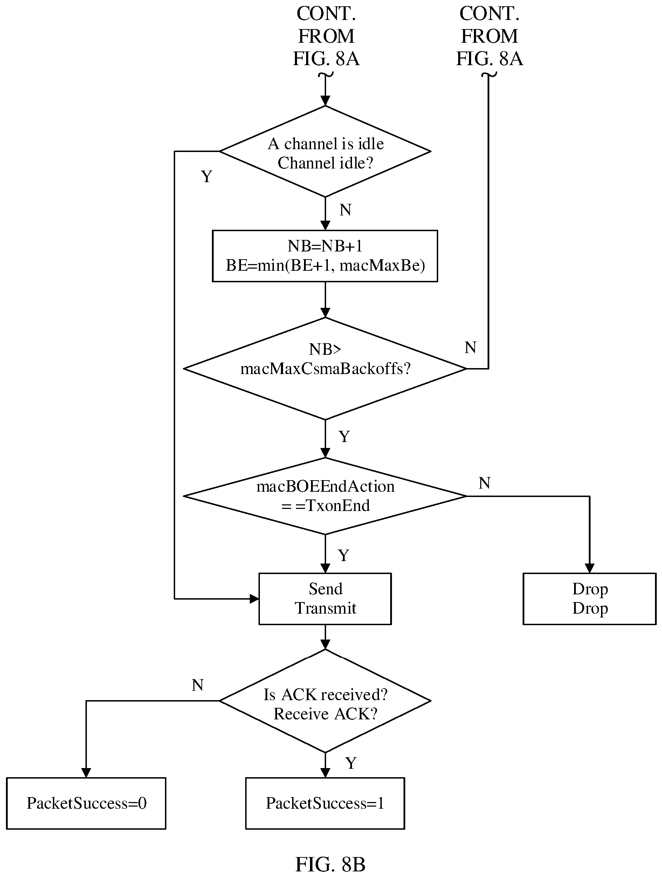

For example, FIG. 8A and FIG. 8B are still another diagram of a channel access procedure according to an embodiment of this application. It may be understood that in FIG. 8A and FIG. 8B, "Y" represents "yes (yes)" and "N" represents "no (no)". When there is a to-be-sent radio frame in a communication apparatus, the communication apparatus may enter a channel access procedure. As shown in FIG. 8A and FIG. 8B, the channel access procedure includes the following steps.
(1) Initialize a number of backoff (NB) counter, that is, NB=0.
(2) Determine whether previous transmission succeeds, that is, whether a parameter PacketSuccess is equal to 1. If the parameter PacketSuccess is equal to 1, it indicates that the previous transmission succeeds. If the parameter PacketSuccess is not equal to 1, it indicates that the previous transmission fails. Specifically, for example, a first radio frame is sent in the previous transmission. If a response frame corresponding to the first radio frame is received within preset time, it indicates that the sending succeeds, and the parameter PacketSuccess may be set to 1. If the response frame corresponding to the first radio frame is not received within the preset time, it indicates that the sending fails, and the parameter PacketSuccess may be set to 0.
(3) If the previous transmission succeeds, that is, the parameter PacketSuccess is equal to 1, initialize a second backoff exponent (BE), for example, BE=macMinBe, where macMinBe is a minimum value of the second backoff exponent. If the previous transmission fails, that is, the parameter PacketSuccess is not equal to 1, increase a value of the second backoff exponent, for example, perform BE=min(BE+1, macMaxBe).
(4) Perform random backoff, for example, delay for random until backoff periods (delay for random (2*BE or 2^{BE}) until backoff periods). A length of a backoff window (or duration of a backoff period) is 2*BE or 2^{BE}.
(5) Perform CCA after the backoff is completed. If a result of the CCA is that a channel is idle, that is, the channel is not occupied, a radio frame may be sent (transmitted). If the result of the CCA is that the channel is busy, that is, the channel is occupied, both the second backoff exponent (BE) and the number of backoff (NB) counter increase, for example, BE=min(BE+1, macMaxBe) and NB=NB+1, where macMaxBe is a maximum value of the second backoff exponent.
(6) Determine whether a value of the number of backoff (NB) counter exceeds a preset threshold (macMaxCsmaBackoffs); and if the value of the NB counter does not exceed the preset threshold, that is, NB≤macMaxCsmaBackoffs, reperform backoff, that is, repeat step (4) and step (5); or if the value of the NB counter exceeds the preset threshold, that is, NB>macMaxCsmaBackoffs, determine whether to send (transmit) or drop (drop) the radio frame based on a determining condition (that is, whether parameters macBOEEndAction and TxonEnd are equal); and if macBOEEndAction is equal to TxonEnd, send the radio frame; or if macBOEEndAction is not equal to TxonEnd, drop the radio frame.
(7) Determine whether a response frame (for example, ACK) for the radio frame is received after the radio frame is sent. If the response frame for the radio frame is received within the preset time, the parameter PacketSuccess is set to 1; or if the response frame for the radio frame is not received within the preset time, the parameter PacketSuccess is set to 0. It may be understood that whether the parameter PacketSuccess is set to 1 when the response frame is received or the parameter PacketSuccess is set to 1 when the response frame is not received is not limited in embodiments of this application. This is merely an example for description herein.

Optionally, both the minimum value macMinBe of the second backoff exponent and the maximum value macMaxBe of the second backoff exponent are MAC layer configuration parameters, and are usually configured by an upper layer.

In embodiments of this application, when a collision occurs (that is, no response frame is received after sending is performed), a value of BE is increased to increase a backoff window, so that in a scenario in which a hidden terminal exists, collisions or conflicts are reduced, and channel access performance is improved. In addition, no new backoff exponent is introduced in embodiments of this application, so that implementation is simple, a quantity of parameters is small, and complexity is low.

It may be understood that, in the channel access procedures shown in FIG. 6A to FIG. 8B, the number of backoff (NB) counter is used to record a number of backoff caused when a result of CCA is that a channel is busy. In some possible implementations, a new counter may be used to record a number of backoff caused by a collision. For ease of description, the new counter may be referred to as a number of collisions (number of collisions, NC) counter or a first counter. A name of the new counter is not limited in this application. When the communication apparatus receives the response frame for the first radio frame within the preset time after sending the first radio frame, that is, when the sending succeeds, the communication apparatus sets the NC counter to 0. When the communication apparatus does not receive the response frame for the first radio frame within the preset time after sending the first radio frame, that is, when the sending fails, the communication apparatus increases the value of the NC counter. With reference to any one of FIG. 6A and FIG. 6B, FIG. 7A and FIG. 7B, and FIG. 8A and FIG. 8B, after the parameter PacketSuccess is set to 1 in step (7), the value of the NC counter may be set to 0; and after the parameter PacketSuccess is set to 0, the value of the NC counter may be increased, for example, NC=NC+1.

Optionally, when the value of the NC counter is greater than a first preset threshold, or the value of the NB counter is greater than a second preset threshold (namely, macMaxCsmaBackoffs), the communication apparatus may reset the value of the NC counter to 0.

In embodiments of this application, a new counter is used to record a number of backoff caused by a collision. A design is more flexible, and recording of the NB counter may not be affected. It may be understood that the NB counter may be used to control a maximum number of backoff of a packet, and the NC counter is used to control a quantity of times from sending a packet to successfully sending the packet. For different scenarios, a maximum value of the NB counter and a maximum value of the NC counter may be set to different values based on different meanings of the NB counter and the NC counter, so that the NB counter and the NC counter can perform counting separately, and this is more flexible.

In some other possible implementations, the NB counter may be used to record all numbers of backoff. In other words, the NB counter records not only the number of backoff caused when a result of CCA is that a channel is busy, but also the number of backoff caused by a collision. When the communication apparatus receives the response frame for the first radio frame within the preset time after sending the first radio frame, that is, when the sending succeeds, the communication apparatus sets the NB counter to 0. When the communication apparatus does not receive the response frame for the first radio frame within the preset time after sending the first radio frame, that is, when the sending fails, the communication apparatus increases the value of the NB counter, for example, NB=NB+1, and the communication apparatus does not initialize the NB counter during next channel access. With reference to any one of FIG. 6A and FIG. 6B, FIG. 7A and FIG. 7B, and FIG. 8A and FIG. 8B, after the parameter PacketSuccess is set to 1 in step (7), the value of the NB counter may be set to 0; and after the parameter PacketSuccess is set to 0, the value of the NB counter may be increased, for example, NB=NB+1, and the step of initializing the NB counter is skipped during next channel access.

In embodiments of this application, the NB counter is used to record all numbers of backoff, so that a life cycle of a packet can be maintained in a unified manner, and a maximum delay can be controlled.

To better describe beneficial effects of the channel access method provided in embodiments of this application, the following uses examples to describe simulation results of a throughput and an access success probability in a hidden terminal scenario.

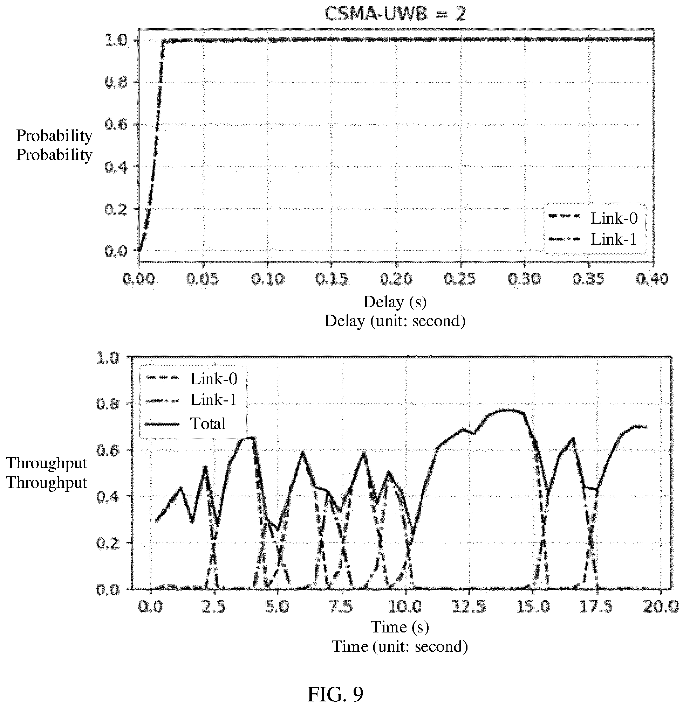

FIG. 9 is a diagram of simulation of beneficial effects according to an embodiment of this application. FIG. 9 is a diagram in which an access success probability (probability) changes with a delay (delay) and a throughput (throughput) changes with time (time) after the channel access method according to embodiments of this application is used. A unit of the horizontal coordinate is second (s), and delay indicates duration from time when a packet enters a sending queue to time when the packet is successfully sent. Link-0 represents the first link in the scenario shown in FIG. 4, Link-1 represents the second link in the scenario shown in FIG. 4, and Total represents a total throughput of the first link and the second link. It can be learned from FIG. 9 that, after the channel access method in embodiments of this application is used, a total throughput is significantly improved. In addition, an initiator on the first link and an initiator on the second link can successfully access a channel and send a packet in short time (about 0.02s), to reduce a sending delay.

Therefore, according to the channel access method provided in embodiments of this application, when a collision/conflict occurs, a backoff window is increased and backoff is performed, so that in a scenario in which a hidden terminal exists (for example, the scenario shown in FIG. 4), collisions or conflicts can be reduced, and channel access performance can be improved.

The foregoing content describes in detail the method provided in this application. To facilitate implementation of the foregoing solutions in embodiments of this application, embodiments of this application further provide a corresponding apparatus or device.

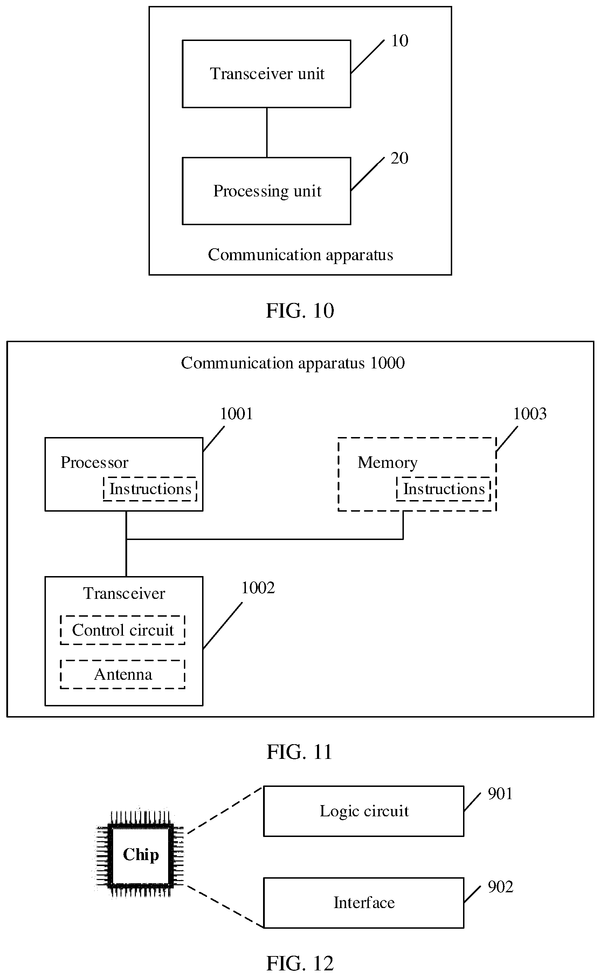

In this application, the communication apparatus is divided into function modules based on the foregoing method embodiments. For example, each function module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes in detail the communication apparatus in embodiments of this application with reference to FIG. 10 to FIG. 12.

FIG. 10 is a diagram of a structure of a communication apparatus according to an embodiment of this application. As shown in FIG. 10, the communication apparatus includes a transceiver unit 10 and a processing unit 20.

The transceiver unit 10 is configured to send a first radio frame; and the processing unit 20 is configured to: in a case in which no response frame for the first radio frame is received after the first radio frame is sent, increase a value of a first backoff exponent, perform backoff based on an increased value of the first backoff exponent, perform clear channel assignment after the backoff is completed, increase a value of a second backoff exponent and reperform backoff when a result of the clear channel assignment is that a channel is busy, and control the transceiver unit 10 to send the first radio frame when the result of the clear channel assignment is that the channel is idle; and/or
the processing unit 20 is further configured to: in a case in which a response frame for the first radio frame is received after the first radio frame is sent, set the first backoff exponent to a minimum value of the first backoff exponent, perform backoff based on a minimum value of the second backoff exponent, perform clear channel assignment after the backoff is completed, increase the value of the second backoff exponent and reperform backoff when a result of the clear channel assignment is that a channel is busy, and control the transceiver unit 10 to send a second radio frame when the result of the clear channel assignment is that the channel is idle.

In a possible implementation, the processing unit 20 is further configured to: when the increased value of the first backoff exponent is less than or equal to a maximum value of the first backoff exponent, perform backoff based on the increased value of the first backoff exponent.

In a possible implementation, the processing unit 20 is further configured to perform backoff based on a maximum value of the first backoff exponent when the increased value of the first backoff exponent is greater than the maximum value of the first backoff exponent.

In a possible implementation, the processing unit 20 is specifically configured to perform backoff based on the value of the second backoff exponent, where the value of the second backoff exponent is the increased value of the first backoff exponent.

In a possible implementation, the first backoff exponent is the same as the second backoff exponent.

In a possible implementation, the processing unit 20 is further configured to: when the response frame for the first radio frame is received after the first radio frame is sent, set a value of a number of collisions counter to 0; and/or when no response frame for the first radio frame is received after the first radio frame is sent, increase the value of the number of collisions counter.

In a possible implementation, the number of collisions counter is a number of backoff counter, and the number of backoff counter is used to record a number of backoff.

In a possible implementation, the processing unit 20 is further configured to reset the value of the number of collisions counter to 0 when an increased value of the number of collisions counter is greater than a preset threshold.

In a possible implementation, the processing unit 20 is specifically configured to: increase the value of the second backoff exponent; and when an increased value of the second backoff exponent is less than or equal to a maximum value of the second backoff exponent, reperform backoff based on the increased value of the second backoff exponent; or when an increased value of the second backoff exponent is greater than a maximum value of the second backoff exponent, reperform backoff based on the maximum value of the second backoff exponent.

In a possible implementation, at least one of the minimum value of the first backoff exponent, the minimum value of the second backoff exponent, the maximum value of the first backoff exponent, and the maximum value of the second backoff exponent is predefined or preconfigured.

In a possible implementation, the transceiver unit 10 is further configured to receive a configuration parameter from a central control node, where the configuration parameter includes one or more of the following: the minimum value of the first backoff exponent, the minimum value of the second backoff exponent, the maximum value of the first backoff exponent, or the maximum value of the second backoff exponent.

In a possible implementation, the configuration parameter is carried in a radio broadcast frame.

It may be understood that the specific descriptions of the transceiver unit and the processing unit described in embodiments of this application are merely examples. For specific functions, steps, or the like performed by the transceiver unit and the processing unit, refer to the foregoing method embodiments. Details are not described herein again.

The foregoing describes the communication apparatuses in embodiments of this application. The following describes a possible product form of the communication apparatus. It should be understood that any form of product that has a function of the communication apparatus in FIG. 10 falls within the protection scope of embodiments of this application. It should be further understood that the following descriptions are merely examples, and the product form of the communication apparatus in embodiments of this application is not limited thereto.

In a possible implementation, in the communication apparatus shown in FIG. 10, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information, and then processed information is input into the processor.

FIG. 11 is a diagram of a structure of a communication apparatus 1000 according to an embodiment of this application. FIG. 11 shows only main components in the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1001, the transceiver 1002, and the memory 1003 may be connected through a communication bus.

For example, the communication apparatus 1000 may be configured to perform functions in the foregoing method embodiments. The processor 1001 may be configured to perform step S102 and step S103 in FIG. 5, and/or configured to perform another process of the technology described in this specification. The transceiver 1002 may be configured to perform step S101 in FIG. 5, and/or configured to perform another process of the technology described in this specification.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, so that the communication apparatus 1000 performs the method described in the foregoing method embodiments. The computer program may be solidified in the processor 1001. In this case, the processor 1001 may be implemented by hardware.

In an implementation, the communication apparatus 1000 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in embodiments of this application may further have more components and the like than those in FIG. 11. This is not limited in embodiments of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 10, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 12 is a diagram of another structure of a communication apparatus according to an embodiment of this application. As shown in FIG. 12, the communication apparatus shown in FIG. 12 includes a logic circuit 901 and an interface 902. That is, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 12 shows an example in which the communication apparatus is a chip. The chip includes the logic circuit 901 and the interface 902.

In embodiments of this application, the logic circuit and the interface may be further coupled to each other. A specific manner of connection between the logical circuit and the interface is not limited in embodiments of this application.

For example, when the communication apparatus is configured to perform the method, the function, or the step performed by the communication apparatus in the foregoing method embodiments, the interface 902 is configured to output a first radio frame; and the logic circuit 901 is configured to: in a case in which no response frame for the first radio frame is received after the first radio frame is sent, increase a value of a first backoff exponent, perform backoff based on an increased value of the first backoff exponent, perform clear channel assignment after the backoff is completed, increase a value of a second backoff exponent and reperform backoff when a result of the clear channel assignment is that a channel is busy, and control the interface 902 to output the first radio frame when the result of the clear channel assignment is that the channel is idle; and/or
the logic circuit 901 is further configured to: in a case in which a response frame for the first radio frame is received after the first radio frame is sent, set the first backoff exponent to a minimum value of the first backoff exponent, perform backoff based on a minimum value of the second backoff exponent, perform clear channel assignment after the backoff is completed, increase the value of the second backoff exponent and reperform backoff when a result of the clear channel assignment is that a channel is busy, and control the interface 902 to output a second radio frame when the result of the clear channel assignment is that the channel is idle.

It may be understood that for specific descriptions of the logic circuit 901 and the interface 902, refer to descriptions of the processing unit and the transceiver unit shown in FIG. 10. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 12, refer to the foregoing embodiments. Details are not described herein again.

This application further provides a computer-readable storage medium. The computer-readable storage medium stores computer code. When the computer code is run on a computer, the computer is enabled to perform operations and/or processing performed by the communication apparatus in the method provided in this application.

This application further provides a computer program. The computer program is used to implement operations and/or processing performed by the communication apparatus in the method provided in this application.

This application further provides a computer program product. The computer program product includes computer code or a computer program. When the computer code or the computer program is run on a computer, operations and/or processing performed by the communication apparatus in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between the apparatuses or units may be electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel access method, comprising:
sending, by a communication apparatus, a first radio frame; and
if the communication apparatus does not receive a response frame for the first radio frame after sending the first radio frame, increasing, by the communication apparatus, a value of a first backoff exponent, and performing backoff based on an increased value of the first backoff exponent; performing, by the communication apparatus, clear channel assignment after the backoff is completed; and if a result of the clear channel assignment is that a channel is idle, sending, by the communication apparatus, the first radio frame, or if a result of the clear channel assignment is that a channel is busy, increasing, by the communication apparatus, a value of a second backoff exponent and reperforming backoff; and/or
if the communication apparatus receives the response frame for the first radio frame after sending the first radio frame, setting, by the communication apparatus, the first backoff exponent to a minimum value of the first backoff exponent, and performing backoff based on a minimum value of the second backoff exponent; performing, by the communication apparatus, clear channel assignment after the backoff is completed; and if a result of the clear channel assignment is that a channel is idle, sending, by the communication apparatus, a second radio frame, or if a result of the clear channel assignment is that a channel is busy, increasing, by the communication apparatus, the value of the second backoff exponent and reperforming backoff.

2. The method according to claim 1, wherein the method further comprises:
if the increased value of the first backoff exponent is less than or equal to a maximum value of the first backoff exponent, performing, by the communication apparatus, backoff based on the increased value of the first backoff exponent.

3. The method according to claim 1, wherein the method further comprises:
if the increased value of the first backoff exponent is greater than a maximum value of the first backoff exponent, performing, by the communication apparatus, backoff based on the maximum value of the first backoff exponent.

4. The method according to any one of claims 1 to 3, wherein the performing backoff based on an increased value of the first backoff exponent comprises:
performing backoff based on the value of the second backoff exponent, wherein the value of the second backoff exponent is the increased value of the first backoff exponent.

5. The method according to any one of claims 1 to 4, wherein the first backoff exponent is the same as the second backoff exponent.

6. The method according to any one of claims 1 to 5, wherein after the sending, by a communication apparatus, a first radio frame, the method further comprises:
when the communication apparatus receives the response frame for the first radio frame after sending the first radio frame, setting, by the communication apparatus, a value of a number of collisions counter to 0; and/or
when the communication apparatus does not receive the response frame for the first radio frame after sending the first radio frame, increasing, by the communication apparatus, the value of the number of collisions counter.

7. The method according to claim 6, wherein the number of collisions counter is a number of backoff counter, and the number of backoff counter is used to record a number of backoff.

8. The method according to claim 6 or 7, wherein the method further comprises:
resetting, by the communication apparatus, the value of the number of collisions counter to 0 when an increased value of the number of collisions counter is greater than a preset threshold.

9. The method according to any one of claims 1 to 8, wherein the increasing, by the communication apparatus, the value of the second backoff exponent and reperforming backoff comprises:
increasing, by the communication apparatus, the value of the second backoff exponent; and
if an increased value of the second backoff exponent is less than or equal to a maximum value of the second backoff exponent, reperforming, by the communication apparatus, backoff based on the increased value of the second backoff exponent; or
if an increased value of the second backoff exponent is greater than a maximum value of the second backoff exponent, reperforming, by the communication apparatus, backoff based on the maximum value of the second backoff exponent.

10. The method according to any one of claims 1 to 9, wherein at least one of the minimum value of the first backoff exponent, the minimum value of the second backoff exponent, the maximum value of the first backoff exponent, and the maximum value of the second backoff exponent is predefined or preconfigured.

11. The method according to any one of claims 1 to 10, wherein before the sending, by a communication apparatus, a first radio frame, the method further comprises:
receiving, by the communication apparatus, a configuration parameter from a central control node, wherein the configuration parameter comprises one or more of the following: the minimum value of the first backoff exponent, the minimum value of the second backoff exponent, the maximum value of the first backoff exponent, or the maximum value of the second backoff exponent.

12. The method according to claim 11, wherein the configuration parameter is carried in a radio broadcast frame.

13. A communication apparatus, comprising:
a transceiver unit, configured to send a first radio frame; and
a processing unit, configured to: in a case in which no response frame for the first radio frame is received after the first radio frame is sent, increase a value of a first backoff exponent, perform backoff based on an increased value of the first backoff exponent, perform clear channel assignment after the backoff is completed, increase a value of a second backoff exponent and reperform backoff when a result of the clear channel assignment is that a channel is busy, and control the transceiver unit to send the first radio frame when the result of the clear channel assignment is that the channel is idle; and/or
the processing unit is further configured to: in a case in which a response frame for the first radio frame is received after the first radio frame is sent, set the first backoff exponent to a minimum value of the first backoff exponent, perform backoff based on a minimum value of the second backoff exponent, perform clear channel assignment after the backoff is completed, increase the value of the second backoff exponent and reperform backoff when a result of the clear channel assignment is that a channel is busy, and control the transceiver unit to send a second radio frame when the result of the clear channel assignment is that the channel is idle.

14. The apparatus according to claim 13, wherein the processing unit is further configured to: when the increased value of the first backoff exponent is less than or equal to a maximum value of the first backoff exponent, perform backoff based on the increased value of the first backoff exponent.

15. The apparatus according to claim 13, wherein the processing unit is further configured to perform backoff based on a maximum value of the first backoff exponent when the increased value of the first backoff exponent is greater than the maximum value of the first backoff exponent.

16. The apparatus according to any one of claims 13 to 15, wherein the processing unit is specifically configured to perform backoff based on the value of the second backoff exponent, wherein the value of the second backoff exponent is the increased value of the first backoff exponent.

17. The apparatus according to any one of claims 13 to 16, wherein the first backoff exponent is the same as the second backoff exponent.

18. The apparatus according to any one of claims 13 to 17, wherein the processing unit is further configured to:
when the response frame for the first radio frame is received after the first radio frame is sent, set a value of a number of collisions counter to 0; and/or
when no response frame for the first radio frame is received after the first radio frame is sent, increase the value of the number of collisions counter.

19. The apparatus according to claim 18, wherein the number of collisions counter is a number of backoff counter, and the number of backoff counter is used to record a number of backoff.

20. The apparatus according to claim 18 or 19, wherein the processing unit is further configured to reset the value of the number of collisions counter to 0 when an increased value of the number of collisions counter is greater than a preset threshold.

21. The apparatus according to any one of claims 13 to 20, wherein the processing unit is specifically configured to:
increase the value of the second backoff exponent; and
when an increased value of the second backoff exponent is less than or equal to a maximum value of the second backoff exponent, reperform backoff based on the increased value of the second backoff exponent; or
when an increased value of the second backoff exponent is greater than a maximum value of the second backoff exponent, reperform backoff based on the maximum value of the second backoff exponent.

22. The apparatus according to any one of claims 13 to 21, wherein at least one of the minimum value of the first backoff exponent, the minimum value of the second backoff exponent, the maximum value of the first backoff exponent, and the maximum value of the second backoff exponent is predefined or preconfigured.

23. The apparatus according to any one of claims 13 to 22, wherein the transceiver unit is further configured to receive a configuration parameter from a central control node, wherein the configuration parameter comprises one or more of the following: the minimum value of the first backoff exponent, the minimum value of the second backoff exponent, the maximum value of the first backoff exponent, or the maximum value of the second backoff exponent.

24. The apparatus according to claim 23, wherein the configuration parameter is carried in a radio broadcast frame.

25. A communication apparatus, comprising a processor and a memory, wherein
the memory is configured to store instructions; and
the processor is configured to execute the instructions, so that the method according to any one of claims 1 to 13 is performed.

26. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 12 is performed.

27. A computer-readable storage medium, wherein the computer-readable storage medium is configured to store a computer program, and when the computer program is executed, the method according to any one of claims 1 to 12 is performed.
